(19) **Europäisches Patentamt / European Patent Office / Office européen des brevets**

(11) **EP 2 382 638 B1**

(12) **FASCICULE DE BREVET EUROPEEN**

(45) Date de publication et mention
de la délivrance du brevet:
**29.10.2014 Bulletin 2014/44**

(21) Numéro de dépôt: **09805801.9**

(22) Date de dépôt: **29.12.2009**

(51) Int Cl.:
***G21C 17/108*** *(2006.01)*    ***G01T 3/00*** *(2006.01)*

(86) Numéro de dépôt international:
**PCT/FR2009/052715**

(87) Numéro de publication internationale:
**WO 2010/076538 (08.07.2010 Gazette 2010/27)**

(54) **Procédé de mesure du flux neutronique dans le coeur d'un réacteur nucléaire à l'aide d'un détecteur au cobalt et dispositif associé**

Verfahren zum Messen des Neutronenflusses im Kern eines Kernreaktors unter Verwendung eines Kobaltdetektors und zugehörige Vorrichtung

Method of measuring the neutron flux in the core of a nuclear reactor using a cobalt detector and associated device

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.12.2008 FR 0859112**

(43) Date de publication de la demande:
**02.11.2011 Bulletin 2011/44**

(73) Titulaire: **AREVA NP**
**92400 Courbevoie (FR)**

(72) Inventeur: **PFEIFFER, Maxime**
**F-75012 Paris (FR)**

(74) Mandataire: **Jacobson, Claude**
**Cabinet Lavoix**
**2, Place d'Estienne d'Orves**
**75441 Paris Cedex 09 (FR)**

(56) Documents cités:
**US-A- 4 197 463    US-A- 4 333 797**

- **SOVKA J A: "Response of Cobalt Neutron Flux Detectors" RESEARCH REPORT OF THE ATOMIC ENERGY OF CANADA, no. Report AECL 3368, juin 1969 (1969-06), pages 1-31, XP009121110**
- **GOLDSTEIN AND W H TODT N P: "A Survey of Self-Powered Detectors - Present and Future" IEEE TRANSACTIONS ON NUCLEAR SCIENCE,, vol. NS-26, no. 1, 1 février 1979 (1979-02-01), pages 916-923, XP001445956**

**Description**

La présente invention concerne en général la mesure du flux neutronique dans le coeur d'un réacteur nucléaire.

Plus précisément, l'invention concerne selon un premier aspect un procédé de mesure du flux neutronique dans le coeur d'un réacteur nucléaire.

Il est nécessaire de connaître l'état du coeur d'un réacteur nucléaire, en vue de garantir la sûreté (protection des assemblages combustible) et le bon fonctionnement de ce réacteur. Dans ce but, il est possible de suivre plusieurs paramètres liés à la puissance volumique du coeur : la puissance linéique suivant l'axe du coeur, le RFTC (Rapport de Flux Thermique Critique), le déséquilibre axial et radial de puissance etc...Des détecteurs neutroniques sont utilisés pour reconstruire ces paramètres, du fait qu'ils sont fonctions du flux neutronique dans le coeur.

Plusieurs types de détecteurs neutroniques sont utilisés :

- les détecteurs connus sous le nom de « chambres excores », qui sont placés hors du coeur, et qui donnent un signal proportionnel au flux moyen dans un quart du coeur ;
- les détecteurs « incores », qui sont situés à l'intérieur du coeur. Certains détecteurs incores sont mobiles. Ils sont insérés périodiquement dans le coeur pour établir une image précise de la distribution de puissance dans le coeur.

D'autres détecteurs incores sont fixes et donnent en continu un signal représentatif du flux neutronique local dans une zone du coeur du réacteur. Les détecteurs fixes sont soumis en permanence à l'irradiation, ce qui entraîne à terme une perte de sensibilité de ces détecteurs et une dégradation de la précision du signal correspondant.

Il est connu d'utiliser comme détecteurs incores fixes des détecteurs de neutrons au cobalt. Ces détecteurs se comportent comme des générateurs de courant passif, le courant étant généré par des réactions nucléaires au sein du détecteur sous l'effet du flux neutronique. L'activation du cobalt 59 en cobalt 60 dans le détecteur a pour effet à terme de détériorer le rapport signal utile/ signal total de ce détecteur, ce qui nuit à la précision de la mesure.

Dans ce contexte, l'invention porte sur un procédé de mesure du flux neutronique dans le coeur d'un réacteur nucléaire à l'aide d'un détecteur de neutrons au cobalt, qui permet d'obtenir une meilleure précision.

Plus précisément, l'invention porte sur un procédé de mesure du flux neutronique dans le coeur d'un réacteur nucléaire, le procédé comprenant plusieurs étapes exécutées de manière récurrente à des instants espacés d'une période, le procédé comprenant à chaque instant donné les étapes suivantes :

- acquérir un signal total à l'aide d'un détecteur de neutrons au cobalt placé à l'intérieur du coeur du réacteur nucléaire ;
- évaluer un facteur de calibrage représentatif de la composante retardée du signal total dû à la présence de cobalt 60 dans le détecteur ;
- évaluer un signal corrigé représentatif du flux neutronique au niveau du détecteur à partir du signal total et du facteur de calibrage ;
- évaluer une pente représentative de l'évolution du facteur de calibrage entre l'instant précédent et l'instant donné ;

le facteur de calibrage à l'instant donné étant évalué en fonction du facteur de calibrage évalué à l'instant précédent, de la pente et de la période séparant l'instant donné de l'instant précédent.

Le procédé peut également présenter une ou plusieurs des caractéristiques ci-dessous considérée(s) individuellement ou selon toutes les combinaisons techniquement possibles :

- le détecteur de neutrons est un détecteur fixe ;
- la pente à l'instant donné est évaluée au moins en fonction du signal corrigé à l'instant précédent et du facteur de calibrage à l'instant précédent;
- le procédé de mesure comprend à chaque instant donné $T^N$ une étape d'évaluation d'un facteur de charge représentatif de l'évolution de la puissance du réacteur localement autour du détecteur de neutrons entre l'instant précédent $T^{N-1}$ et l'instant donné, la pente à l'instant donné étant évaluée aussi en fonction du facteur de charge;
- le facteur de charge à chaque instant donné est évalué en calculant la puissance moyenne du réacteur localement autour du détecteur de neutrons entre l'instant précédent et l'instant donné, et en divisant ladite puissance moyenne par la valeur de la puissance du réacteur localement autour du détecteur de neutrons à l'instant précédent;
- le procédé de mesure comprend à chaque instant donné une étape d'évaluation d'un facteur de charge représentatif de l'évolution de la puissance du réacteur entre l'instant précédent et l'instant donné, la pente à l'instant donné étant évaluée aussi en fonction du facteur de charge.

Selon un second aspect, l'invention concerne un dispositif de mesure du flux neutronique dans le coeur d'un réacteur nucléaire, le dispositif de mesure comprenant au moins un détecteur de neutrons au cobalt placé à l'intérieur du coeur du réacteur, et un calculateur exécutant le procédé mentionné ci-dessus.

Le dispositif peut également présenter la caractéristique que le détecteur de neutrons est un détecteur fixe.

D'autres caractéristiques et avantages de l'invention ressortiront de la description détaillée qui est donnée ci-dessous, à titre indicatif et nullement limitatif, en référence aux figures annexées, parmi lesquelles :

- la figure 1 est un diagramme d'étapes illustrant le procédé de l'invention ;
- la figure 2 est une représentation schématique simplifiée d'un détecteur de neutrons au cobalt ;
- la figure 3 est une représentation schématique du procédé de correction a posteriori du signal total du détecteur de neutrons ;
- la figure 4 est une représentation graphique de l'évolution en fonction du temps de la composante retardée du signal généré par le détecteur de neutrons, due à la présence de cobalt 60 ;
- la figure 5 est une simulation de l'évolution en fonction du temps de l'écart entre la composante retardée du signal total due à la présence de cobalt 60 dans le détecteur et le facteur de calibrage calculé conformément à l'invention (en traits pleins), et de l'écart entre la composante retardée et un facteur de calibrage évalué au début de chaque cycle et ensuite considéré comme constant au long du cycle (en traits interrompus) ;
- la figure 6 est une représentation graphique en fonction du temps du facteur de calibrage évalué conformément à l'invention (traits pleins) et de la composante retardée du signal total (trais interrompus) ; et
- la figure 7 est une représentation schématique simplifiée du dispositif de mise en oeuvre de l'invention.

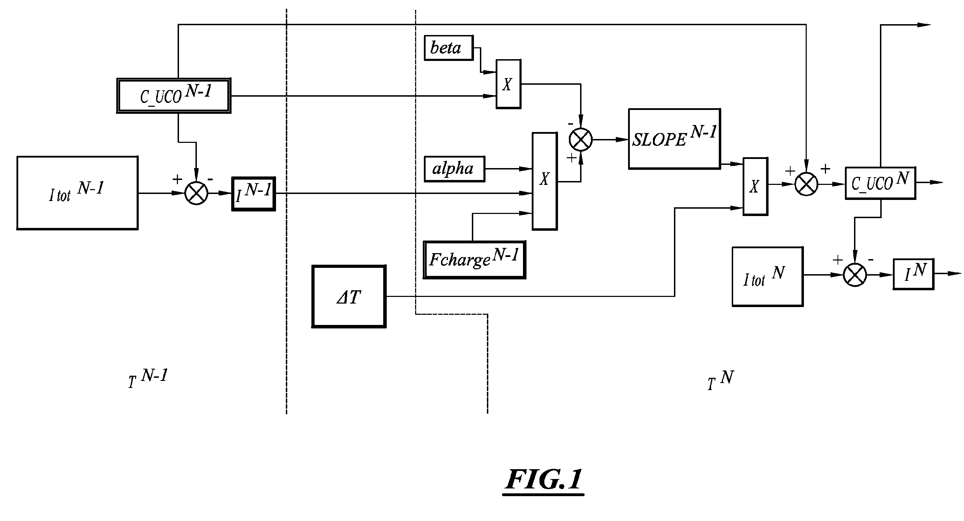

Le procédé, représenté schématiquement sur la figure 1, est destiné à mesurer le flux neutronique dans le coeur d'un réacteur nucléaire, à l'aide d'au moins un détecteur de neutrons au cobalt placé à l'intérieur du coeur du réacteur. Ce type de détecteur est connu sous le sigle Co-SPND (Cobalt-Silver self Powered Neutron Detector).

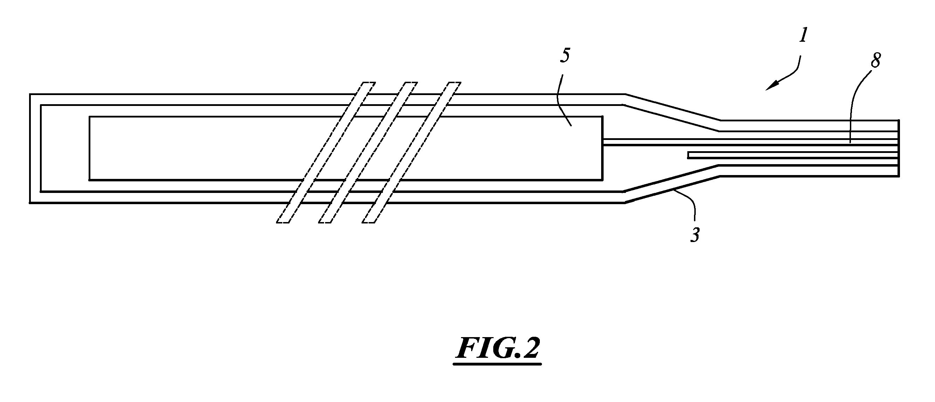

Comme le montre la figure 2, un détecteur de neutrons au cobalt 1 comporte une gaine externe 3, et un émetteur central 5 disposé à l'intérieur de la gaine 3. La gaine externe 3 fait office de cathode, l'émetteur central 5 faisant office d'anode. L'émetteur central 5 est constitué, avant utilisation, d'un matériau comportant essentiellement du cobalt 59. La gaine externe 3 est constituée d'un matériau conduisant l'électricité. L'émetteur central 5 présente un diamètre d'environ 2 mm et une longueur d'environ 21 cm.

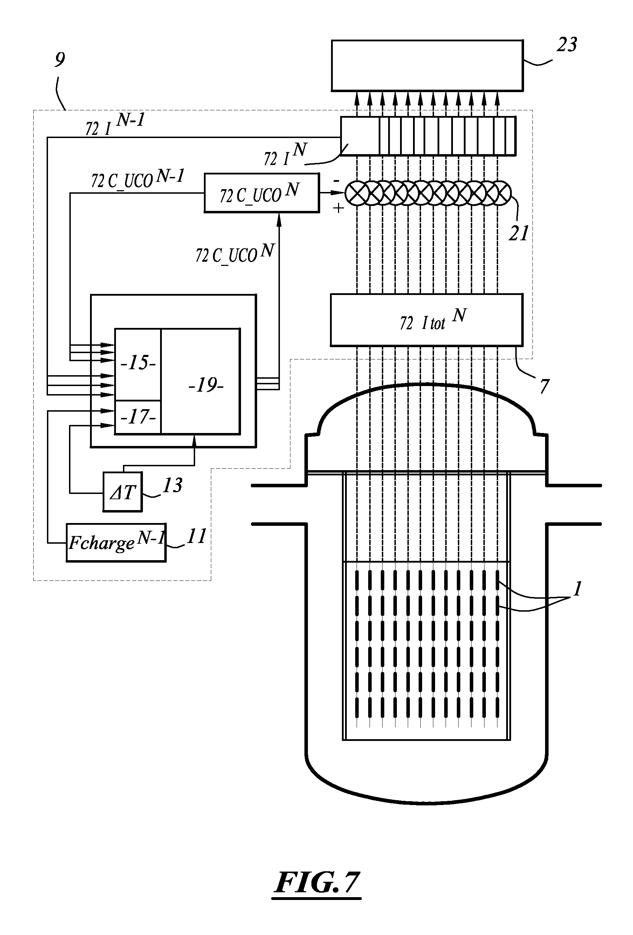

Sous l'effet du flux neutronique, il se produit des réactions nucléaires dans l'émetteur central 5, entraînant un transfert d'électrons de l'émetteur central 5 vers la gaine externe 3. L'émetteur central 5 est relié à un dispositif amplificateur 7 (voir figure 7) par un câble électriquement conducteur 8. Le dispositif 7 est apte à amplifier et à numériser le courant provenant de l'émetteur 5. Le signal recueilli par le dispositif 7 sera appelé par la suite signal total (Itot).

Le détecteur 1 agit donc comme un générateur de courant continu. Il ne nécessite pas d'alimentation électrique extérieure. Il est donc particulièrement adapté à un fonctionnement comme détecteur fixe au sein d'un assemblage de combustible nucléaire dans le coeur du réacteur nucléaire.

Les détecteurs au cobalt délivrent en continu un signal dont la qualité se dégrade lentement tout au long de leur utilisation dans le coeur. Cette dégradation se traduit par l'apparition croissante d'une composante quasi-statique dans le signal total Itot délivré par le détecteur 1. L'importance de cette composante quasi-statique relativement au signal utile augmente avec le temps. On entend ici par signal utile, la composante du signal total Itot qui est proportionnelle au flux neutronique au niveau du détecteur 1. La composante quasi-statique, appelée composante retardée $I_{60}$, est due à la présence de cobalt 60 dans l'émetteur central 5. Le cobalt 60 se forme par activation du cobalt 59 sous l'effet du flux neutronique. Cette composante retardée $I_{60}$ est quasi-statique au sens où elle est constante sur de petits intervalles de temps, par exemple sur toute la durée d'un transitoire de puissance dans le réacteur. De tels transitoires de puissance durent de quelques heures à quelques jours. La composante retardée $I_{60}$ est donc décorrélée du flux neutronique, au sens où elle ne varie pas quand le flux neutronique au niveau du détecteur 1 varie. La composante retardée $I_{60}$ du flux neutronique crée ainsi une perte substantielle de précision du détecteur 1 de neutrons lors d'un transitoire de puissance.

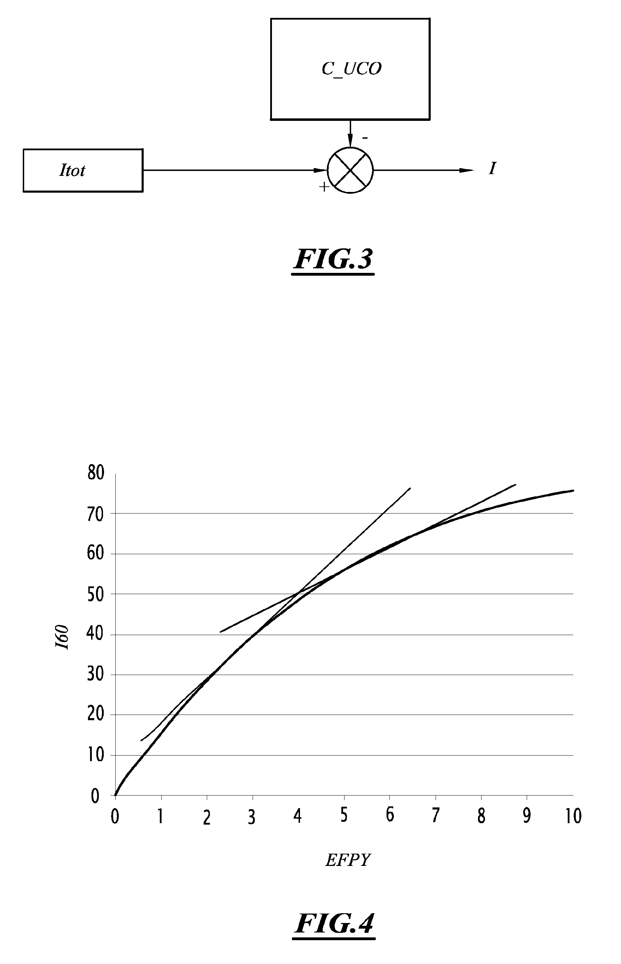

De manière à pouvoir utiliser le signal délivré en continu par le détecteur 1 de neutrons, il est donc nécessaire de corriger a posteriori ce signal, comme illustré sur la figure 3. Cette correction est effectuée en soustrayant du signal total Itot un facteur de calibrage C_UCO représentatif de la composante retardée $I_{60}$ dûe à la présence de cobalt 60 dans le détecteur 1. Ainsi, le signal corrigé est calculé de la manière suivante :

$$I = Itot - C\_UCO$$

Dans cette équation, Itot correspond au signal délivré en continu par le détecteur 1 de neutrons, C_UCO est un facteur de calibrage, et I est le signal corrigé (signal utile), ce signal corrigé étant représentatif du flux neutronique au niveau du détecteur 1.

C_UCO est déterminé périodiquement par calcul, comme expliqué plus loin.

L'invention tire partie du fait que, comme illustré sur la figure 4, la composante retardée $I_{60}$ du signal total Itot due à la présence de cobalt 60 dans le détecteur 1 évolue lentement en fonction du temps. La figure 4 représente un exemple d'évolution de la composante retardée $I_{60}$, pour un détecteur 1 donné. L'axe des abscisses est gradué en équivalent année à pleine puissance. Il ressort clairement de cette figure 4 que la composante retardée $I_{60}$ augmente en fonction du temps, mais qu'en revanche la pente diminue en fonction du temps. La composante retardée $I_{60}$ augmente lentement, et son évolution peut être considérée comme sensiblement linéaire sur des intervalles de temps de l'ordre du mois. En revanche, la pente doit être réactualisée régulièrement.

Par ailleurs, on considère dans l'invention que l'évolution du facteur de calibrage C_UCO en fonction du temps est régie par une équation formellement analogue à l'équation de l'évolution de la teneur en cobalt 60 dans l'émetteur central 5. Cette évolution est discrétisée avec un pas de temps adapté de manière à tirer partie de la quasi-linéarité de la composante retardée $I_{60}$.

Plus précisément, comme illustré sur la figure 1, le procédé comprend plusieurs étapes, exécutées de manière récurrente à des instants $T^N$, lesdits instants étant espacés de périodes $\Delta T$.

A chaque instant $T^N$, les étapes suivantes sont exécutées :

- acquérir un signal total $Itot^N$, à l'aide du détecteur 1 de neutrons au cobalt ;
- évaluer une pente $SLOPE^{N-1}$, représentative de l'évolution du facteur de calibrage C_UCO entre l'instant précédent $T^{N-1}$ et l'instant donné $T^N$ ;
- évaluer un facteur de calibrage $C\_UCO^N$, représentatif de la composante retardée $I_{60}$ du signal total $Itot^N$ due à la présence de cobalt 60 dans le détecteur 1, le facteur de calibrage $C\_UCO^N$ à l'instant donné $T^N$ étant évalué en fonction du facteur de calibrage $C\_UCO^{N-1}$ évalué à l'instant précédent $T^{N-1}$, de la pente $SLOPE^{N-1}$, et de la période $\Delta T$ séparant l'instant donné $T^N$ de l'instant précédent $T^{N-1}$;
- évaluer un signal corrigé $I^N$ représentatif du flux neutronique au niveau du détecteur à partir du signal total $Itot^N$ et du facteur de calibrage $C\_UCO^N$.

Le signal total $Itot^N$ est le signal délivré par le détecteur 1 de neutrons. La pente $SLOPE^{N-1}$ et le facteur de calibrage $C\_UCO^N$ sont déterminés à l'aide des équations suivantes :

$$SLOPE^{N-1} = \alpha \ \times \ Fcharge^{N-1} \ \times \ I^{N-1} \ - \ \beta \ \times \ C\_UCO^{N-1}$$

$$C\_UCO^N \ = \ C\_UCO^{N-1} \ + \ SLOPE^{N-1} \ \times \Delta T$$

où :

l'indice N correspond l'itération N (instant $T^N$),
$I^{N-1}$ correspond au signal corrigé évalué à l'instant précédent $T^{N-1}$,
$\alpha$ et $\beta$ sont des constantes pré-déterminées,
$Fcharg^{N-1}$ est un facteur de charge représentatif de l'évolution de la puissance du réacteur entre l'instant précédent $T^{N-1}$ et l'instant donné $T^N$,
$\Delta T$ est la durée de la période séparant l'instant $T^{N-1}$ et l'instant $T^N$.
$\alpha$ et $\beta$ valent par exemple respectivement $3.310^{-9}$ s$^{-1}$, et $4.1710^{-9}$ s$^{-1}$.
$\Delta T$ peut être constant, ou au contraire peut être variable.

La pertinence de ces équations repose sur les considérations suivantes.

L'évolution du nombre d'atomes de cobalt 60 dans l'émetteur central 5 du détecteur 1 de neutrons au cobalt est gouvernée par l'équation suivante :

$$\frac{d\mathrm{N}_{60}}{dt} = \mathrm{N}_{59} \cdot \left( \sum_i \sigma_i^{59} \phi_i \right) - \lambda_{60} \mathrm{N}_{60}$$

où :

- $N_{59}$ et $N_{60}$ sont les nombres de noyaux des isotopes 59 et 60 du cobalt dans l'émetteur central 5 du détecteur 1 de neutrons ;
- $\sigma_i^{59}$ est la section efficace d'absorption du cobalt 59 pour les neutrons du groupe d'énergie i ;
- $\phi_i$ est le flux de neutrons d'énergie du groupe i autour du détecteur 1 de neutrons ;
- $\lambda_{60}$ est la constante de décroissance radioactive du cobalt 60, fonction elle-même de la demi-vie du cobalt 60.

Cette équation, réécrite à l'aide des composantes du signal délivré par le détecteur 1 de neutrons, devient :

$$\frac{dI_{60}}{dt} = \alpha\left(I_{tot} - I_{60}\right) - \beta I_{60}$$

où :

- Itot est le signal total délivré par le détecteur 1 de neutrons ;
- $I_{60}$ est la composante retardée du signal total Itot dûe à la présence de cobalt 60 dans le détecteur ;
- $\alpha$ et $\beta$ sont les constantes évoquées plus haut.

Si on adopte pour le facteur de calibrage C_UCO une équation d'évolution instantanée présentant la même forme que l'équation ci-dessus, on obtient :

$$\frac{dC\_UCO}{dt} = \alpha\left(I\right) - \beta C\_UCO$$

où $\alpha$ et $\beta$ sont les paramètres définis précédemment,
I est le signal corrigé, c'est-à-dire le signal total généré par le détecteur 1 de neutrons duquel on a déduit le facteur de calibrage C_UCO.

Fcharge$^{N-1}$ est déterminé à chaque instant donné $T^N$ en calculant la puissance moyenne du réacteur (intégrale de la puissance du réacteur) localement autour du détecteur 1 entre l'instant précédent $T^{N-1}$ et l'instant donné $T^N$, et en divisant ladite puissance moyenne par la valeur de la puissance du réacteur localement autour du détecteur 1 à l'instant précédent $T^{N-1}$. Autrement dit, le facteur de charge Fcharge$^{N-1}$ se calcule selon l'équation suivante :

$$\text{Fcharge}^{N-1} = \left(\int_{TN-1}^{TN} P(t)\right) / \left(P^{N-1} . \Delta T\right)$$

où P(t) est la puissance locale du réacteur autour du détecteur, et $P^{N-1}$ est la puissance locale du réacteur autour du détecteur à l'instant $T^{N-1}$.

Ainsi, si la puissance du réacteur entre les instants $T^{N-1}$ et $T^N$ reste constante et égale à la puissance du réacteur à l'instant $T^{N-1}$, le facteur de charge Fcharge$^{N-1}$ sera pris égal à 1. Au contraire, si la puissance du réacteur évolue entre les instants $T^{N-1}$ et $T^N$, cette évolution sera prise en compte par le facteur de charge Fcharge$^{N-1}$, qui sera alors différent de 1.

L'initialisation de l'algorithme est faite quand le réacteur est à l'arrêt, en mesurant le signal délivré par le détecteur 1 de neutrons du cobalt. Ce signal est rigoureusement égal à la composante retardée $I_{60}$ due au cobalt 60 dans le détecteur 1, c'est à dire à la décroissance naturelle du cobalt 60 se trouvant dans l'émetteur central 5 du détecteur 1 de neutrons. C_UCO$^0$ est choisi égal à la valeur ainsi mesurée. Après démarrage du réacteur, on effectue à une pluralité d'instants $T^N$ les étapes suivantes :

- détermination de la période $\Delta T$ entre $T^{N-1}$ et $T^N$ ;

- détermination du facteur de charge $Fcharge^{N-1}$ représentatif de l'évolution de la puissance du réacteur localement autour du détecteur autour de l'instant $T^{N-1}$ et $T^N$ ;
- détermination de la pente $SLOPE^{N-1}$, représentatif de l'évolution du facteur de calibrage entre l'instant précédent $T^{N-1}$ et l'instant donné $T^N$ ;
- détermination du facteur de calibrage $C\_UCO^N$ représentatif de la composante retardée $I_{60}$ du signal total $Itot^N$ due à la décroissance du cobalt 60 dans le détecteur 1 ;
- acquisition du signal total $Itot^N$ délivré par le détecteur 1 de neutrons au cobalt ;
- évaluation du signal corrigé $I^N$ et mémorisation de ce paramètre.

La période $\Delta T$ entre deux instants $T^{N-1}$ et $T^N$ est typiquement de l'ordre de 1 mois.

Cet algorithme est répété de manière récurrente à différents instants $T^N$, jusqu'à l'arrêt suivant du réacteur. Une nouvelle initialisation est alors effectuée pendant l'arrêt suivant, par mesure du signal délivré par le détecteur 1 de neutrons et affectation de celui-ci à $C\_UCO^0$.

L'algorithme décrit ci-dessus présente l'avantage d'être stable. Ainsi, tout écart entre la composante retardée $I_{60}$ et le facteur de calibrage $C\_UCO^N$ à un instant $T^N$ n'est pas amplifié aux itérations suivantes. Si à un instant $T^N$, le facteur de calibrage $C\_UCO^N$ est supérieur à la composante retardée $I_{60}$, à l'instant suivant l'évolution du facteur de calibrage sera plus faible que l'évolution de la composante retardée $I_{60}$, de telle sorte que l'écart diminuera. En effet, si on a :

$$C\_UCO > I_{60} \text{ alors } Itot - C\_UCO < Itot - I_{60}.$$

De plus,

$$\frac{dI_{60}}{dt} = \alpha(I_{tot} - I_{60}) - \beta I_{60} \text{ et } \frac{dC\_UCO}{dt} = \alpha(I_{tot} - C\_UCO) - \beta C\_UCO$$

$$\alpha(Itot - I_{60}) > \alpha(Itot - C\_UCO) \text{ et } -\beta I_{60} > -\beta C\_UCO$$

d'où

$$\frac{dI_{60}}{dt} > \frac{dCUCO}{dt}$$

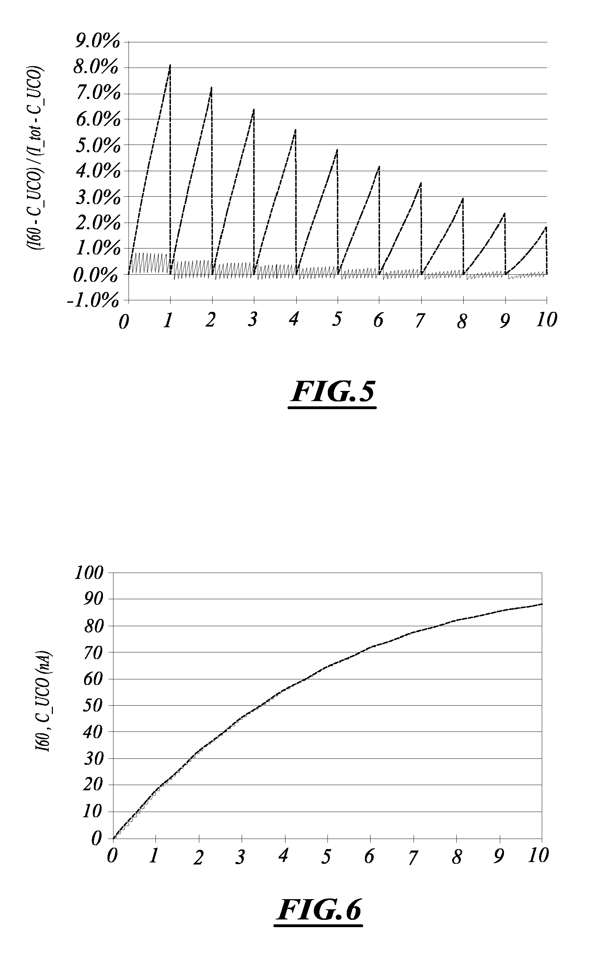

On a représenté, sur la figure 5, l'évolution de l'écart entre le facteur de calibrage $C\_UCO$ et la composante retardée $I_{60}$ ,pour deux méthodes de calcul du facteur de calibrage $C\_UCO$. L'écart est en ordonnée sur la figure 5. Il est exprimé en %. Il est calculé selon l'équation suivante :

$$Ecart = (I_{60} - C\_UCO) / (Itot - C\_UCO)$$

L'abscisse correspond au temps, exprimé en équivalent année pleine puissance.

La courbe en traits pleins correspond à la méthode pour évaluer le facteur de calibrage $C\_UCO$ exposée ci-dessus. le facteur de calibrage $C\_UCO$ est réinitialisé après chaque équivalent année pleine puissance, c'est-à-dire aux graduations 0, 1, 2, etc...

La courbe en traits interrompus correspond à un procédé dans lequel le facteur de calibrage $C\_UCO$ est initialisé à chaque arrêt du réacteur, puis est maintenu constant. Ainsi, le facteur de calibrage $C\_UCO$ est réinitialisé aux graduations 0, 1, 2, etc..., c'est-à-dire tous les équivalents année à pleine puissance.

On voit sur la figure 5 que le procédé décrit plus haut est beaucoup plus précis, l'écart étant inférieur à 1%.

Les courbes de la figure 5 ont été déterminées en effectuant une simulation du fonctionnement du coeur du réacteur, et du comportement du détecteur 1 de neutrons au cobalt. Une telle simulation met en jeu des calculs lourds et des données d'entrées spécifiques au chargement du coeur et à l'usure de chaque détecteur 1 de neutrons. Au contraire, le procédé de l'invention ne met en jeu que des calculs simples, qui peuvent être facilement et rapidement exécutés par un calculateur, avec peu de données d'entrée accessibles par mesure.

Sur la figure 6, on a représenté l'évolution en fonction du temps de la composante retardée $I_{60}$ (traits interrompus) et du facteur de calibrage C_UCO calculé par la méthode décrite plus haut (traits pleins). Le temps en abscisse est exprimé en équivalent année à pleine puissance. On voit que C_UCO suit $I_{60}$ avec un très faible écart.

Le dispositif prévu pour la mise en oeuvre du procédé décrit plus haut est illustré sur la figure 7.

Le dispositif comporte par exemple 72 détecteurs 1 de neutrons au cobalt répartis dans le coeur du réacteur nucléaire. Ces détecteurs 1 de neutrons sont fixes.

Les détecteurs 1 de neutrons sont par exemple répartis en douze colonnes, chaque colonne comportant six détecteurs. Dans chaque colonne, les détecteurs 1 de neutrons sont disposés verticalement, les uns au-dessus des autres. Ils sont régulièrement écartés les un des autres. Les douze colonnes sont réparties à différents endroits du coeur du réacteur.

Le dispositif de mesure comporte également un calculateur 9, symbolisé par un cadre en traits mixtes sur la figure 7. Le calculateur 9 comporte le dispositif 7 d'amplification et de numérisation des signaux totaux venant des détecteurs 1 de neutrons 1. Chaque détecteur 1 de neutrons est relié à un canal distinct du dispositif 7, qui lui est propre.

Le dispositif 7 constitue donc des moyens pour acquérir, à des instants donnés $T^N$, le signal total $Itot^N$ fourni par chaque détecteur 1 de neutrons.

Le calculateur 9 comporte par ailleurs des moyens 11 pour évaluer le facteur de charge $Fcharge^{N-1}$, à chaque instant donné $T^N$, en calculant la puissance moyenne du réacteur localement autour de chaque détecteur 1 de neutrons au cobalt entre l'instant précédent $T^{N-1}$ et l'instant donné $T^N$, et en divisant cette puissance moyenne par la valeur de la puissance du réacteur localement autour dudit détecteur 1 à l'instant précédent $T^{N-1}$. Le calculateur 9 récupère les données concernant la puissance dans le système d'exploitation de la centrale nucléaire.

Par ailleurs, le calculateur 9 comporte des moyens 13 pour calculer la période écoulée depuis le précédent instant $T^{N-1}$ et l'instant donné $T^N$.

Le calculateur 9 comporte également des mémoires 15 prévues pour stocker les 72 signaux corrigés $I^{N-1}$ calculés à l'instant précédent $T^{N-1}$ et les 72 facteurs de calibrage $C\_UCO^{N-1}$ calculés à l'instant précédent $T^{N-1}$.

Le calculateur 9 comporte encore des moyens 17 permettant d'évaluer la pente $SLOPE^{N-1}$ à l'instant donné $T^N$ pour chaque détecteur 1 de neutrons au cobalt, en fonction du signal corrigé $I^{N-1}$ mémorisé et du facteur de calibrage $C\_UCO^{N-1}$ mémorisé. Le calcul est effectué en utilisant l'équation décrite plus haut.

Le calculateur 9 comporte encore des moyens 19 pour calculer le facteur de calibrage $C\_UCO^N$ de chacun des détecteurs 1 de neutrons au cobalt à l'instant donné $T^N$, en fonction du facteur de calibrage $C\_UCO^{N-1}$ mémorisé, de la pente $SLOPE^{N-1}$ et de la période $\Delta T$ séparant l'instant donné $T^N$ de l'instant précédent $T^{N-1}$.

De plus, le calculateur 9 comporte des moyens 21 pour calculer, pour chaque détecteur 1 de neutrons au cobalt, indépendamment des autres, le signal corrigé $I^N$, par différence entre le signal total $Itot^N$ et le facteur de calibrage $C\_UCO^N$ à l'instant $T^N$.

Les signaux corrigés de chacun des détecteurs 1 de neutrons peuvent ensuite être exploités par les systèmes de surveillance et protection 23 de la centrale nucléaire.

Le procédé de mesure du flux neutronique décrit ci-dessus présente de multiples avantages.

Du fait que ce procédé comprend plusieurs étapes exécutées de manière récurrente à des instants espacés d'une période, le procédé comprenant à chaque instant donné les étapes suivantes :

- acquérir un signal Itot à l'aide d'un détecteur 1 de neutrons au cobalt placé à l'intérieur du coeur du réacteur ;
- évaluer un facteur de calibrage C_UCO représentatif de la composante retardée $I_{60}$ du signal total Itot due à la présence de cobalt 60 dans le détecteur 1 de neutrons;
- évaluer un signal corrigé représentatif du flux neutronique au niveau du détecteur 1 de neutrons à partir du signal total Itot et du facteur de calibrage C_UCO;
- évaluer une pente SLOPE représentative de l'évolution du facteur de calibrage C_UCO entre l'instant précédent et l'instant donné ;

le facteur de calibrage C_UCO à l'instant donné étant évalué en fonction du facteur de calibrage C_UCO évalué à l'instant précédent, de la pente SLOPE et de la période séparant l'instant donné de l'instant précédent le procédé permet de mesurer le flux neutronique de manière très précise, sans détérioration importante du rapport entre le signal utile et le signal total Itot du détecteur 1 à long terme.

La composante retardée $I_{60}$ due à la présence de cobalt 60 dans l'émetteur central 5 et à sa décroissance naturelle, est corrigée de manière adéquate par un facteur de calibrage C_UCO qui est réévalué à chaque itération. Le facteur de calibrage C_UCO est avantageusement réévalué de manière linéaire, en prenant en compte une pente SLOPE. Une telle réévaluation linéaire permet néanmoins de garantir une bonne précision, car l'évolution de la com-

posante retardée $I_{60}$ du signal est linéaire sur des intervalles de temps limitées, de l'ordre du mois.

La pente SLOPE est elle-même réévaluée périodiquement, en utilisant une équation simple dont la forme est dérivée de l'équation d'évolution du cobalt 60 au sein de l'émetteur central 5 du détecteur 1 de neutrons au cobalt. Une telle équation permet d'obtenir une excellente précision du procédé de mesure. L'équation permettant de réactualiser la pente SLOPE prend en compte un facteur de charge Fcharge, représentatif de l'évolution de la puissance du réacteur localement autour du détecteur entre l'instant précédent et l'instant donné, ce qui contribue à adapter l'algorithme à un fonctionnement de la centrale en suivi de charge pour lequel la puissance peut varier entre deux instants $T^N$.

Le procédé est très simple d'utilisation, puisque les données d'entrée sont fournies à l'algorithme par la lecture directe du signal total Itot des détecteurs 1 de neutrons au cobalt, et par les résultats des itérations précédentes. Il ne nécessite pour l'initialisation que des mesures du signal délivré par chacun des détecteurs 1 de neutrons quand le réacteur est à l'arrêt, et la puissance nulle. Ces signaux sont considérés comme étant les facteurs de calibrage $C\_UCO^0$ initiaux à prendre en compte.

Le procédé ne met en oeuvre que des calculs rapides et légers, de telle sorte que l'algorithme peut être intégré directement dans un outil informatique de calibrage, utilisé automatiquement. Ceci réduit les risques d'erreur humaine.

Un calcul entièrement théorique, modélisant le facteur de calibrage C_UCO de manière précise en fonction de l'usure du détecteur 1 sous flux neutronique, nécessiterait la connaissance fine des valeurs du flux neutronique localement autour du détecteur 1 tout au long du cycle de fonctionnement, et la connaissance précise du degré d'usure du détecteur 1 en début de cycle. Ces valeurs sont différentes pour chacun des détecteurs 1, sont très dépendantes de la localisation du détecteur 1 au sein du coeur et dépendent de l'historique du flux tout au long de l'utilisation du détecteur 1. Des équipements spécifiques et un suivi individuel des détecteurs 1 seraient donc nécessaires.

Le procédé est applicable quand le réacteur fonctionne en suivi de charge, ou en fonctionnement prolongé à puissance réduite (FPPR), du fait de la prise en compte du paramètre Fcharge.

De plus, le procédé est stable, du fait que tout erreur dans le facteur de calibrage C_UCO, résultant par exemple d'erreur de mesure, est naturellement réduite par l'algorithme.

Le procédé ne requiert aucun calcul spécifique de neutronique pour anticiper l'évolution de la composante retardée $I_{60}$ due au cobalt 60. Il ne nécessite que la connaissance du facteur de calibrage C_UCO de l'itération précédente, du signal corrigé I évalué à l'itération précédente, du temps écoulé entre deux itérations, et, en cas de fonctionnement en suivi de charge, du facteur de charge Fcharge local au niveau du détecteur 1.

Le procédé utilise des données propres à chaque détecteur 1 de neutrons au cobalt, et permet ainsi un traitement individuel de chaque détecteur 1 avec un paramètre de correction propre prenant en compte l'usure différente de chacun des détecteurs 1.

Ainsi, la précision des mesures de chaque détecteur 1 de neutrons au cobalt est améliorée, ce qui présente des avantages en terme de sûreté (meilleures connaissances des flux neutroniques) et des avantages économiques (amélioration des marges de fonctionnement du réacteur, meilleur traitement de l'usure des détecteurs 1 de neutrons au cobalt).

Le dispositif décrit ci-dessus peut présenter de multiples variantes.

Le facteur de charge $Fcharge^{N-1}$ peut être évalué en considérant non pas l'évolution de la puissance de réacteur localement autour du détecteur mais l'évolution de la puissance globale du réacteur entre l'instant précédent $T^{N-1}$ et l'instant donné $T^N$. Dans ce cas, le facteur de charge $Fcharge^{N-1}$ est le même pour tous les détecteurs et la correction est moins précise. Il est alors évalué à partir de la puissance moyenne du réacteur entre l'instant précédent $T^{N-1}$ et l'instant donné $T^N$, et en divisant ladite puissance moyenne par la valeur de la puissance du réacteur à l'instant précédent $T^{N-1}$. La puissance moyenne du réacteur entre $T^{N-1}$ et $T^N$ peut être évaluée par exemple en divisant le nombre de jours équivalent à pleine puissance entre $T^{N-1}$ et $T^N$ par le nombre de jours écoulés entre $T^{N-1}$ et $T^N$. Le nombre de jours équivalent à pleine puissance peut être récupéré dans un calculateur de la centrale nucléaire.

Le dispositif de mesure peut comporter un nombre quelconque de détecteurs 1 de neutrons au cobalt, inférieur à 72 ou supérieur à 72.

La période $\Delta T$ séparant deux instants consécutifs $T^N$ et $T^{N+1}$ peut être constante ou peut être variable.

## Revendications

1. Procédé de mesure du flux neutronique dans le coeur d'un réacteur nucléaire, le procédé comprenant plusieurs étapes exécutées de manière récurrente à des instants ($T^N$) espacés d'une période ($\Delta T$), le procédé comprenant à chaque instant donné ($T^N$) les étapes suivantes :

   - acquérir un signal total ($Itot^N$) à l'aide d'un détecteur de neutrons (1) au cobalt placé à l'intérieur du coeur du réacteur ;
   - évaluer un facteur de calibrage ($C\_UCO^N$) représentatif de la composante retardée ($I_{60}$) du signal total due à la présence de cobalt 60 dans le détecteur de neutrons (1) ;

- évaluer un signal corrigé ($I^N$) représentatif du flux neutronique au niveau du détecteur (1) à partir du signal total ($Itot^N$) et du facteur de calibrage (C_UCO$^N$) ;
- évaluer une pente (SLOPE$^{N-1}$) représentative de l'évolution du facteur de calibrage entre l'instant précédent ($T^{N-1}$) et l'instant donné ($T^N$) ;

le facteur de calibrage (C_UCO$^N$) à l'instant donné ($T^N$) étant évalué en fonction du facteur de calibrage (C_UGO$^{N-1}$) évalué à l'instant précédent ($T^{N-1}$), de la pente (SLOPE$^{N-1}$), et de la période ($\Delta$T) séparant l'instant donné ($T^N$) de l'instant précédent ($T^{N-1}$).

2. Procédé de mesure selon la revendication 1, **caractérisé en ce que** le détecteur de neutrons (1) est un détecteur fixe.

3. Procédé de mesure selon la revendication 1 ou 2, **caractérisé en ce que** la pente (SLOPE$^{N-1}$) à l'instant donné ($T^N$) est évaluée au moins en fonction du signal corrigé ($I^{N-1}$) à l'instant précédent ($T^{N-1}$) et du facteur de calibrage (C_UCO$^{N-1}$) à l'instant précédent ($T^{N-1}$).

4. Procédé de mesure selon la revendication 3, **caractérisé en ce qu'**il comprend à chaque instant donné ($T^N$) une étape d'évaluation d'un facteur de charge (Fcharge$^{N-1}$) représentatif de l'évolution de la puissance du réacteur localement autour du détecteur de neutrons (1) entre l'instant précédent ($T^{N-1}$) et l'instant donné ($T^N$), la pente (SLOPE$^{N-1}$) à l'instant donné ($T^N$) étant évaluée aussi en fonction du facteur de charge (Fcharge$^{N-1}$).

5. Procédé de mesure selon la revendication 4, **caractérisé en ce que** le facteur de charge (Fcharge$^{N-1}$) à chaque instant donné ($T^N$) est évalué en calculant la puissance moyenne du réacteur localement autour du détecteur de neutrons (1) entre l'instant précédent ($T^{N-1}$) et l'instant donné ($T^N$), et en divisant ladite puissance moyenne par la valeur de la puissance du réacteur localement autour du détecteur de neutrons (1) à l'instant précédent ($T^{N-1}$).

6. Procédé de mesure selon la revendication 3, **caractérisé en ce qu'**il comprend à chaque instant donné ($T^N$) une étape d'évaluation d'un facteur de charge (Fcharge$^{N-1}$) représentatif de l'évolution de la puissance du réacteur entre l'instant précédent ($T^{N-1}$) et l'instant donné ($T^N$), la pente (SLOPE$^{N-1}$) à l'instant donné ($T^N$) étant évaluée aussi en fonction du facteur de charge (Fcharge$^{N-1}$).

7. Dispositif de mesure du flux neutronique dans le coeur d'un réacteur nucléaire, le dispositif de mesure comprenant au moins un détecteur de neutrons au cobalt (1) placé à l'intérieur du coeur du réacteur, et un calculateur (9) exécutant le procédé selon l'une quelconque des revendications 1 à 6.

8. Dispositif de mesure selon la revendication 7, **caractérisé en ce que** le détecteur de neutrons (1) est un détecteur fixe.

## Patentansprüche

1. Verfahren zum Messen des Neutronenflusses im Kern eines Nuklearreaktors, wobei das Verfahren mehrere Schritte aufweist, die wiederholt zu Zeitpunkten ($T^N$) ausgeführt werden, die sich im Abstand einer Periode ($\Delta$T) befinden, wobei das Verfahren zu jedem gegebenen Zeitpunkt ($T^N$) die folgenden Schritte aufweist:

- Beschaffen eines Gesamtsignals ($Itot^N$) mithilfe eines Kobalt-Neutronendetektors (1), der im Inneren des Kerns des Reaktors platziert ist;
- Auswerten eines Kalibrierungsfaktors (C_UCO$^N$), der die verzögerte Komponente ($I_{60}$) des Gesamtsignals aufgrund der Präsenz von Kobalt-60 in dem Neutronendetektor (1) repräsentiert;
- Auswerten eines korrigierten Signals (IN), das den Neutronenfluss auf Höhe des Detektors (1) repräsentiert, ausgehend von dem Gesamtsignal ($Itot^N$) und dem Kalibrierungsfaktor (C_UCO$^N$);
- Auswerten einer Steigung (SLOPE$^{N-1}$), die die Änderung des Kalibrierungsfaktors zwischen dem vorhergehenden Zeitpunkt ($T^{N-1}$) und dem gegebenen Zeitpunkt ($T^N$) repräsentiert;

wobei der Kalibrierungsfaktor (C_UCO$^N$) zu dem gegebenen Zeitpunkt ($T^N$) in Abhängigkeit des Kalibrierungsfaktors (C_UCO$^{N-1}$), ausgewertet zum vorhergehenden Zeitpunkt ($T^{N-1}$), der Steigung (SLOPE$^{N-1}$) und der Periode ($\Delta$T), die den gegebenen Zeitpunkt ($T^N$) von dem vorhergehenden Zeitpunkt ($T^{N-1}$) trennt, ausgewertet wird.

2. Verfahren zum Messen gemäß Anspruch 1, dadurch charakterisiert, dass der Neutronendetektor (1) ein fester Detektor ist.

3. Verfahren zum Messen gemäß Anspruch 1 oder 2, dadurch charakterisiert, dass die Steigung (SLOPE$^{N-1}$) zum gegebenen Zeitpunkt (T$^N$) mindestens in Abhängigkeit des korrigierten Signals (I$^{N-1}$) zum vorhergehenden Zeitpunkt(T$^{N-1}$) und des Kalibrierungsfaktors (C_UCO$^{N-1}$) zum vorhergehenden Zeitpunkt(T$^{N-1}$) ausgewertet wird.

4. Verfahren zum Messen gemäß Anspruch 3, dadurch charakterisiert, dass es zu jedem gegebenen Zeitpunkt (T$^N$) einen Schritt zum Auswerten eines Lastfaktors (Fcharge$^{N-1}$), der die Änderung der Leistung des Reaktors lokal um den Neutronendetektor (1) zwischen dem vorhergehenden Zeitpunkt (T$^{N-1}$) und dem gegebenen Zeitpunkt (T$^N$) repräsentiert, aufweist, wobei die Steigung (SLOPE$^{N-1}$) zum gegebenen Zeitpunkt (T$^N$) auch in Abhängigkeit des Lastfaktors (Fcharge$^{N-1}$) ausgewertet wird.

5. Verfahren gemäß Anspruch 4, dadurch charakterisiert, dass der Lastfaktor (Fcharge$^{N-1}$) zu jedem gegebenen Zeitpunkt (T$^N$) durch Berechnen der mittleren Leistung des Reaktors lokal um den Neutronendetektor (1) zwischen dem vorhergehenden Zeitpunkt (T$^{N-1}$) und dem gegebenen Zeitpunkt (T$^N$) und durch Dividieren der mittleren Leistung durch den Wert der Leistung des Reaktors lokal um den Neutronendetektor (1) zum vorhergehenden Zeitpunkt (T$^{N-1}$) ausgewertet wird.

6. Verfahren zum Messen gemäß Anspruch 3, dadurch charakterisiert, dass es zu jedem gegebenen Zeitpunkt (T$^N$) einen Schritt zum Auswerten eines Lastfaktors (Fcharge$^{N-1}$), der die Änderung der Leistung des Reaktors zwischen dem vorhergehenden Zeitpunkt (T$^{N-1}$) und dem gegebenen Zeitpunkt (T$^N$) repräsentiert, aufweist, wobei die Steigung (SLOPE$^{N-1}$) zum gegebenen Zeitpunkt (T$^N$) auch in Abhängigkeit des Lastfaktors (Fcharge$^{N-1}$) ausgewertet wird.

7. Vorrichtung zum Messen des Neutronenflusses im Kern eines Nuklearreaktors, wobei die Vorrichtung zum Messen mindestens einen Kobalt-Neutronendetektor (1), der im Inneren des Kerns des Reaktors platziert ist, und einen Rechner (9), der das Verfahren gemäß einem der Ansprüche 1 bis 6 durchführt, aufweist.

8. Vorrichtung zum Messen gemäß Anspruch 7, dadurch charakterisiert, dass der Neutronendetektor (1) ein fester Detektor ist.

**Claims**

1. A method for measuring the neutron flux in the core of a nuclear reactor, the method comprising several steps recurrently performed at instants (T$^N$) separated by a period (ΔT), the method comprising at each given instant (T$^N$) the following steps:

   - acquiring a total signal (Itot$^N$) by means of a cobalt neutron detector (1) placed inside the core of the reactor;
   - assessing a calibration factor (C_UCO$^N$) representative of the delayed component (I$_{60}$) of the total signal due to the presence of cobalt 60 in the neutron detector (1);
   - assessing a corrected signal (I$^N$) representative of the neutron flux at the detector (1) from the total signal (Itot$^N$) and from the calibration factor (C_UCO$^N$);
   - assessing a slope (SLOPE$^{N-1}$) representative of the time-dependent change in the calibration factor between the preceding instant (T$^{N-1}$) and the given instant (T$^N$);

   the calibration factor (C_UCO$^N$) at the given instant (T$^N$) being assessed as a function of the calibration factor (C_UCO$^{N-1}$) assessed at the preceding instant (T$^{N-1}$), of the slope (SLOPE$^{N-1}$), and of the period (ΔT) separating the given instant (T$^N$) from the preceding instant (T$^{N-1}$).

2. The measurement method according to claim 1, **characterized in that** the neutron detector (1) is a fixed detector.

3. The measurement method according to claim 1 or 2, **characterized in that** the slope (SLOPE$^{N-1}$) at the given instant (T$^N$) is assessed at least as a function of the corrected signal (I$^{N-1}$) at the preceding instant (T$^{N-1}$) and of the calibration factor (C_UCO$^{N-1}$) at the preceding instant (T$^{N-1}$).

4. The measurement method according to claim 3, **characterized in that** it comprises at each given instant (T$^N$) a step for assessing a load factor (Fcharge$^{N-1}$) representative of the time-dependent change in the power of the reactor locally around the neutron detector (1) between the preceding instant (T$^{N-1}$) and the given instant (T$^N$), the slope (SLOPE$^{N-1}$) at the given instant (T$^N$) being assessed also as a function of the load factor (Fcharge$^{N-1}$).

5. The measurement method according to claim 4, **characterized in that** the load factor (Fcharge$^{N-1}$) at each given instant (T$^N$) is assessed by calculating the average power of the reactor locally around the neutron detector (1) between the preceding incident (T$^{N-1}$) and the given instant (T$^N$), and by dividing said average power by the value of the power of the reactor locally around the neutron detector (1) at the preceding instant (T$^{N-1}$).

6. The measurement method according to claim 3, **characterized in that** it comprises at each given instant (T$^N$) a step for assessing a load factor (Fcharge$^{N-1}$) representative of the time-dependent change in the power of the reactor between the preceding instant (T$^{N-1}$) and the given instant (T$^N$), the slope (SLOPE$^{N-1}$) at the given instant (T$^N$) being also assessed as a function of the load factor (Fcharge$^{N-1}$).

7. A device for measuring the neutron flux in the core of a nuclear reactor, the measurement device comprising at least one cobalt neutron detector (1) placed inside the core of the reactor and a computer (9) implementing a process according to anyone of the claims 1 to 6.

8. The measurement device according to claim 7, **characterized in that** the neutron detector (1) is a fixed detector.

**FIG.1**

**_FIG.2_**

**FIG.3**

**FIG.4**

**_FIG.5_**

**_FIG.6_**

**FIG.7**